# FASCICULE DE BREVET EUROPEEN

(11) **EP 0 645 326 B1**
(45) Date de publication et mention de la délivrance du brevet: **07.06.1995**
(21) Numéro de dépôt: 93440078.9
(22) Date de dépôt: 21.09.1993
(51) Int. Cl.: B65G 65/48

(54) **Système de dosage en continu**
Vorrichtung zum kontinuierlichen Dosieren
Device for continuous dosing

(43) Date de publication de la demande: 29.03.1995
(73) Titulaire: HYPROMAT FRANCE S.A., F-67720 Hoerdt (FR)
(72) Inventeur: Kormann, Robert, F-67800 Hoenheim (FR)
(74) Mandataire: Littolff, Denis

(56) Documents cités:
- WO-A-91/04933
- DE-B- 1 272 225
- DE-C- 617 823
- GB-A- 543 675
- US-A- 1 679 398

## Description

La présente invention concerne un système de dosage en continu d'un produit granuleux ou pulvérulent soluble dans l'eau et dont la viscosité, notamment en surface des grains ou des particules, augmente rapidement à l'humidité.

Le ramollissement des particules, lorsque l'humidité ambiante croît, augmente la propension des grains à s'agglomérer. Ces derniers créent des grumeaux pouvant nuire au bon fonctionnement du système de dosage. En effet, les orifices d'un tel système, de même que les voies d'accès entre les différents composants, sont dimensionnés d'une manière assez précise en vue d'assurer une fonction de dosage, et les grumeaux résultant de l'agglomération intempestive des grains humides risquent de les obstruer.

C'est particulièrement vrai pour les systèmes prévus pour fonctionner au voisinage de cuves de liquide, et en particulier de liquides chauds qui s'évaporent.

Le problème s'étant déjà posé à de nombreuses reprises, on connaît plusieurs types de dispositifs conçus pour effectuer un dosage continu de produits granuleux en milieu humide. Dans la suite, l'exemple choisi pour illustrer l'invention est celui des savons en poudre utilisés pour obtenir un liquide nettoyant à base d'eau chaude. Mais les applications possibles d'un tel système sont nombreuses, allant du dosage des poudres détergentes à celui de particules alimentaires pour réaliser des boissons, avec utilisation d'un liquide stocké à proximité ou simplement dans des conditions climatiques ou d'ambiance supposant un degré hygrométrique élevé.

Parmi les familles existantes, les doseurs à vis sans fin, que l'on trouve aussi dans l'industrie agro-alimentaire, sont relativement répandus. La vis sans fin est positionnée horizontalement dans un logement situé sous le réservoir de produit granuleux, pour lequel elle est accessible au moyen d'un orifice qui la surmonte. Un autre orifice placé sous ladite vis, souvent décalé par rapport au premier, permet au produit de s'échapper vers le bas, les grains tombant du seul fait de leur poids dans une cuve remplie de liquide. Les orifices et les espaces entre les filets de la vis constituent des rétrécissements et des zones de concentration de grains. Lorsque l'humidité augmente, par exemple au-dessus d'une cuve remplie d'eau très chaude, les grains s'agglomèrent préférentiellement dans les endroits où l'humidité est la plus forte, c'est à dire précisément au niveau desdits orifices et dans les espaces inter-filets, puisque la vapeur éventuellement dégagée par la cuve remonte par eux vers le réservoir. La conjonction entre la concentration, le rétrécissement et l'humidité maximale à ces endroits provoque des bouchons dans toute la partie doseuse et en partie basse du réservoir à produit pulvérulent.

La présence de bras râcleurs solidarisés aux arbres tournant des réservoirs n'améliore pas la situation, car ils ne font en général que déplacer des grumeaux déjà formés. Au surplus, les trois zones de concentration de grains sont placées séquentiellement dans la chaîne d'évacuation du produit vers la cuve, et les risques d'engorgement sont multipliés.

C'est le cas par exemple du dispositif décrit dans le brevet WO-A-91 04933 au nom de GMUER, qui décrit un système comprenant un bac supérieur alimentant en particules une chambre située sur un système de dosage à vis sans fin.

La passage entre le réservoir et la chambre inférieure consiste en une ouverture pratiquée dans un tronçon de surface limitée de la cloison horizontale de séparation. De même, la cloison inférieure de la chambre d'approvisionnement de la vis sans fin comporte un couloir d'évacuation latéral donnant sur celle-ci. Ces deux cloisons sont surmontées de bras racleurs.

Selon une autre conception possible, le produit s'évacue vers le bas par une simple trappe aux dimensions réglables. Cette solution n'est pas plus satisfaisante que la précédente, car l'humidité qui s'infiltre par la trappe - également placée au-dessus de la cuve - provoque des agglomérats qui la bouchent.

En réalité, le point commun entre ces deux systèmes vient des pressions qui existent au bas des réservoirs au niveau des dispositifs doseurs proprement dits. Dans les deux cas, c'est dans ces zones qui reçoivent en premier l'afflux d'humidité provenant des cuves inférieures que s'exerce la pression maximale, en particulier quand les réservoirs sont remplis. Le poids cumulé des grains supérieurs comprime les grains des zones inférieures, qui s agglomèrent très rapidement dès que le dispositif doseur entre en fonctionnement.

Pour un système de dosage fonctionnant en continu, il est primordial de trouver un compromis réaliste entre l'utilisation d'un petit réservoir limitant les pressions mais offrant une autonomie limitée, et l'installation d'un réservoir offrant un plus grand volume, augmentant par conséquent les pressions en partie basse, mais disposant d'une autonomie bien plus confortable.

Dans cette recherche, il faut signaler l'existence de réservoirs avec une partie tronconique, permettant de stocker une plus grande quantité de produit granuleux. Malgré la pente résultant de la portion tronconique, les pressions au niveau du dispositif doseur sont suffisantes pour occasionner les mêmes bouchons qu'avec un réservoir cylindrique, bien qu'une certaine quantité de particules ne soit pas directement au-dessus de celles de la base.

Un autre aspect important du dosage réside dans la conception de la voie de sortie du produit extrait du dispositif doseur. Les solutions présentées ci-dessus, par vis sans fin horizontale ou par trappe, avec des bras ou peignes mélangeurs chargés d'amener les grains au niveau des orifices, n'empêchent nullement les bouchons de se former dès que le taux d'humidité augmente.

Dans les deux cas, aucune étude dynamique sur la forme des conduits de sortie ou leur mouvement relativement au dispositif doseur n'a été réalisée.

Cela est par exemple manifeste dans le brevet GB-A-543 675, qui n'est pas prévu pour des granules fusibles circulant dans un flux humide. Le circuit d'évacuation prévoit par conséquent des fonctions de dosage sans prendre en compte la possibilité d'amalgame des grains entre eux. D'où l'existence d'un réservoir conique, d'un orifice central limité permettant l'accès à la zone inférieure, et d'une plate-forme rotative avec des reliefs creux, qui sont toutes des zones potentiellement favorables à la formation de grumeaux et/ou d'amalgames.

Ces inconvénients n'existent plus dans la présente invention qui présente une solution combinant des détails et dispositifs techniques rigoureusement étudiés, dans le but d'offrir un système de dosage fiable, délivrant le produit en continu avec une régularité de performance excellente.

L'objectif majeur que réalise l'invention est d'empêcher la formation de bouchons qui perturbent le fonctionnement dès l'apparition d'une ambiance humide.

Un autre objectif atteint est de proposer un système au débit réglable qui ne soit pas affecté par le problème de l'encombrement des voies de sortie même pour un faible débit.

Un tel système offre une autonomie suffisante et peut fonctionner avec n'importe quel type de produit granuleux, particulaire ou pulvérulent.

Enfin, il s'adapte à des taux d'humidité élevés, et reste opérationnel même au-dessus d'une cuve remplie d'eau bouillante dégageant une forte vapeur d'eau, sans provoquer de bouchons de particules agglomérées.

Le système de dosage selon l'invention repose sur un premier principe directeur fondamental, connu en soi : les deux volumes constituant le réservoir à produit d'une part et le dispositif doseur d'autre part sont distincts, placés respectivement l'un sur l'autre et de section horizontale sensiblement de même forme. Les deux volumes comportent chacun un arbre tournant muni, au moins au voisinage d'une voie de sortie inférieure du produit, d'au moins une pale pour éviter l'agglomération des grains et pour les diriger vers lesdites voies. La section horizontale du dispositif doseur est bien inférieure à celle du réservoir, et l'orifice de passage entre le réservoir et le dispositif doseur, au niveau du raccordement entre les volumes, est, selon une caractéristique majeure de l'invention, égal à la section horizontale du dispositif doseur. Le volume inférieur comporte au surplus une lamelle horizontale qui pénètre via une voie de sortie pratiquée dans la paroi du dispositif doseur dans le volume dudit dispositif doseur, permettant de guider le produit granuleux vers ladite voie de sortie et d'empêcher l'agglomération des grains entre eux.

Le dispositif doseur de l'invention comporte une voie de sortie inférieure réglable débouchant sur un plateau tournant de section horizontale supérieure à la sienne, et un moyen de guidage des grains vers la périphérie dudit plateau où les grains tombent par gravitation.

Ce plateau est muni d'un revêtement rugueux améliorant les frottements, destiné à "agripper" les grains, à les empêcher de glisser sur la surface supérieure pendant le mouvement dynamique de leur évacuation. Un glissement intempestif aurait pour effet de provoquer un ralentissement des grains à l'endroit des glissements, d'où la création d'agglomérats par apport des grains suivants qui ne glissent pas et suivent le mouvement dynamique imprimé par le dispositif.

Le réglage du débit est réalisé par un volet mobile, par exemple par coulissement, qui vient obstruer l'orifice de sortie vers le plateau tournant. Cet orifice, ainsi que ledit volet, fonctionnent en combinaison avec la lamelle qui pénètre légèrement à l'intérieur du volume du dispositif doseur proprement dit, selon une direction sensiblement tangentielle au mouvement du plateau tournant, et qui oriente par conséquent les grains vers l'orifice de sortie, sans qu'il soit possible pour ceux-ci de créer des bouchons. La plaquette supérieure empêche le produit granuleux placé au-dessus d'exercer une pression sur les grains en cours d'évacuation et de perturber leur mise en place selon une direction tangentielle.

L'organe de réglage du volet peut par exemple être une vis avec une molette pour l'utilisation manuelle, qui bloque une glissière pratiquée dans ledit volet en une position précise qui détermine le débit autorisé.

Le moyen de guidage des grains vers la périphérie du plateau consiste en une plaquette extérieure au dispositif doseur proprement dit, fixée à celui-ci ou d'une seule pièce avec la lamelle, et qui s'étend vers ladite périphérie et au contact du plateau, de sorte que les grains débouchant de l'orifice de sortie sont entraînés vers la périphérie où ils tombent. Cette plaquette, ainsi que la lamelle tangentielle, présentent une surface lisse du côté où elles assurent le guidage des grains afin de diminuer les frottements. Elle est de préférence perpendiculaire au plateau et prolonge sensiblement la direction de la lamelle interne jusqu'au bord.

Une variante possible consiste en l'utilisation directe de la lamelle comme organe de réglage du débit. Elle est alors mobile entre deux positions extrêmes, une position de repos correspondant à la fermeture complète, l'autre position extrême signifiant l'ouverture maximale de l'orifice de sortie. L'ouverture se fait au moyen d'une tige dont l'extrémité se déplace radialement et exerce une pression en un point de la lamelle, pression dont le point d'application se déplace vers l'intérieur au fur et à mesure que l'on visse une vis de commande.

A l'inverse, lorsqu'on dévisse, il faut que la lamelle revienne en position de repos, avec l'orifice de sortie complètement obstrué. A cet effet, la lamelle est fabriquée dans un matériau élastique, de sorte que la force de rappel s'exerçant sur elle lui permet de regagner cette position de repos sans autre sollicitation extérieure lorsque la tige s'éloigne du centre.

La commande du mouvement de la tige peut s'exercer au moyen d'une molette classique, comme dans la configuration précédente. La tige doit être aplatie, afin de ne pas gêner le flux de sortie des grains.

Selon une configuration classique, connue en soi, le mouvement radial de la tige est obtenu de la manière suivante : cette dernière est solidarisée à un bras mobile en rotation autour d'un axe sensiblement tangentiel à l'enveloppe du dispositif doseur, traversé par une tige filetée radiale libre en rotation, mais fixe en translation par rapport audit dispositif. Celle-ci transforme son mouvement rotatif en un mouvement translatif transversal du bras, qui l'imprime à son tour à la tige en contact avec la lamelle élastique.

La lamelle est, également dans cette configuration, à chaque instant sensiblement tangentielle au mouvement de sortie des grains.

Selon une configuration préférentielle de l'invention, le réservoir et le dispositif doseur sont coaxiaux et dotés d'un unique arbre tournant, lequel présente dans sa partie située dans le réservoir des bras mélangeurs de longueur variable. Dans sa partie traversant le dispositif doseur, il comporte une hélice à pales inclinées, positionnée au-dessus de la lamelle tangentielle, brassant les grains avant leur sortie.

Le système selon l'invention dispose d'une autonomie suffisante, et comporte par conséquent un réservoir d'assez grande hauteur. L'arbre unique qui le traverse, ainsi que le dispositif doseur, comportent comme on l'a vu divers accessoires radiaux qui peuvent occasionner des déséquilibres dynamiques, particulièrement du fait de la grande longueur de l'arbre tournant. C'est pourquoi l'invention comporte également un disque d'équilibrage dynamique, placé sous le plateau tournant, qui rattrape les éventuels balourds de l'ensemble du solide de révolution.

Cet arbre unique est de préférence centré dans les deux volumes constituant le système de dosage, qui sont sensiblement cylindriques, formant un ensemble présentant une symétrie de révolution.

Chaque élément du système bénéficie d'une excellente adaptation à son environnement et à sa fonction. Les problèmes majeurs que l'invention résout simultanément sont la gestion des pressions verticales et la protection contre l'humidité.

En réalité, le plateau tournant, outre sa fonction de transfert des grains du dispositif doseur vers le bac à liquide, offre une excellente isolation à l'air humide qui remonte des cuves. Même si celles-ci contiennent un liquide en ébullition et si elles sont proches du dispositif doseur, la surface supérieure, et par conséquent l'ensemble du dispositif doseur et du réservoir, est préservée de toute trace d'humidité. S'il y a agglomération de grains à cause d'une élévation de leur viscosité surfacique, cela ne peut provenir de l'humidité émanant des cuves.

Un autre facteur provoquant cette élévation de viscosité, évident au vu des dispositifs de l'art antérieur, est la trop grande pression au niveau des grains inférieurs, qui augmente l'intensité des frictions et le dégagement de chaleur en surface des grains dans ces zones sensibles puisque proches des orifices ou voies de sortie. Dans l'invention il y a en quelque sorte une rupture de pression au niveau de l'épaulement intérieur, dû au changement de section horizontale des deux volumes superposés. A l'entrée du dispositif de dosage, des pales fixes brisent en outre le flux des grains et "cassent" la densité du produit. En aérant le produit, on aboutit à une perte de pression en sortie.

Les pales de l'hélice inférieure, disposées de manière à exercer une action vers le haut, ont un effet similaire juste au-dessus de la lamelle tangentielle, laquelle pénètre dans des grains animés d'un mouvement rotatif qui sont d'une part aérés par l'hélice et d'autre part disposés dynamiquement dans la direction de la voie de sortie vers le plateau.

Le mouvement relatif grain/dispositif s'explique par le fait que l'arbre et ses bras mélangeurs, ainsi que l'hélice inférieur et le plateau tournant sont mobiles en rotation. Le corps du réservoir, celui du dispositif doseur ainsi que la lamelle tangentielle et les plaquettes de guidage sont en revanche fixes.

Le plateau tournant est en contact avec les grains inférieurs. Or, on a vu qu'il est muni d'un revêtement rugueux lui permettant de communiquer son mouvement auxdits grains.

D'où l'existence d'un mouvement rotatif des grains inférieurs qui explique le positionnement tangentiel et la fonction de guidage de la lamelle interne. Ce mouvement participe d'ailleurs à la réalisation du mélange, et agit pour empêcher la formation de bouchons de produit granuleux.

A présent, on va expliquer l'invention plus en détail, en se référant aux figures placées en annexe, pour lesquelles :
- La figure 1 représente un coupe longitudinale d'un système selon l'invention,
- La figure 2 est une coupe selon les références A-A de la figure précédente,
- La figure 3 illustre un détail du dispositif doseur, à savoir le volet de réglage.
- La figure 4 illustre la variante du dispositif de réglage du débit, en coupe longitudinale.
- La figure 5 en montre la coupe transversale également selon les références AA de la figure 1.

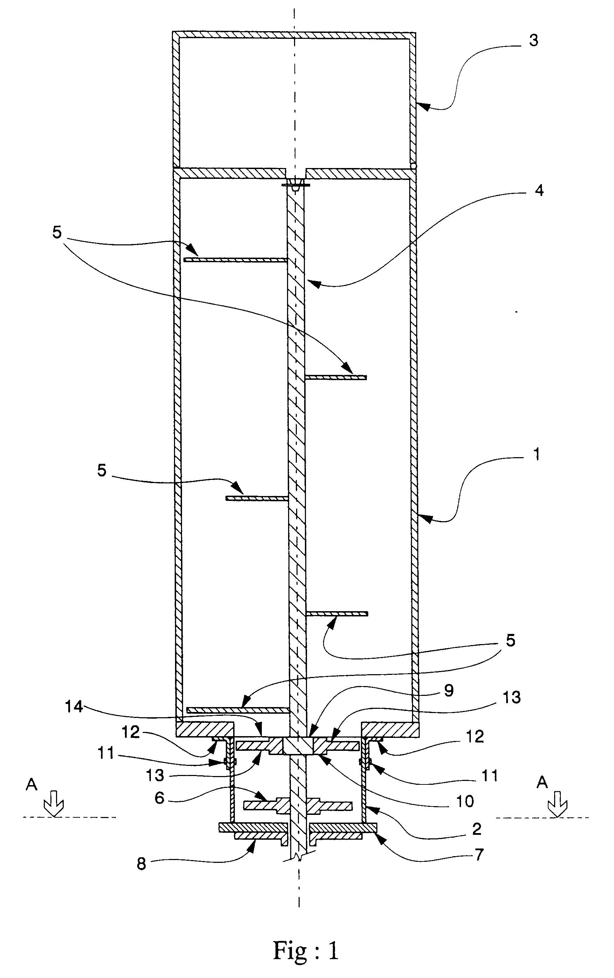

Ces figures montrent en fait une réalisation possible du système de dosage de l'invention. En figure 1, le réservoir (1) à produit granuleux ou pulvérulent surmonte le dispositif doseur (2) proprement dit, de volume bien inférieur. Il est lui-même recouvert par un capot (3) contenant le moteur (non représenté) actionnant l'arbre tournant (4) muni de ses bras (5) de mélange.

Cet arbre (4) entraîne en rotation l'hélice (6) aux pales inclinées, le plateau rugueux (7) et le disque d'équilibrage dynamique (8). La partie traversant le réservoir (1) a un diamètre supérieur à celle qui traverse le dispositif doseur (2). Un double épaulement marquant un court tronçon (9) encore plus large sépare les deux parties.

L'épaulement inférieur du tronçon (9) repose sur un palier auto-lubrifié (10) muni de bras (13) radiaux coplanaires fixés sur le corps du dispositif doseur (2) par exemple à l'aide de vis (11) et d'équerres (12) en contact simultané avec ledit corps (2) et celui du réservoir (1). Ce palier (10) est donc fixe, alors que l'arbre (4) tourne dans son alésage. Les bras (13) sont immobiles, mais servent à obstruer une partie de la surface circulaire (14) d'accès au dispositif (2), diminuant ainsi partiellement la pression et contribuant à aérer le produit.

En revanche, les pales de l'hélice (6) sont entraînées par l'arbre (4) et donc mobiles en rotation. Leur pouvoir de brassage et d'aération du produit est donc beaucoup plus important que celui des bras (13). Il est à noter que ces derniers exercent cependant leur fonction avec une certaine dynamique du fait de la combinaison de leur action avec celle du bras inférieur (5) dans le réservoir (1), qui imprime un mouvement aux particules : il y a donc également une composante dynamique dans cette action.

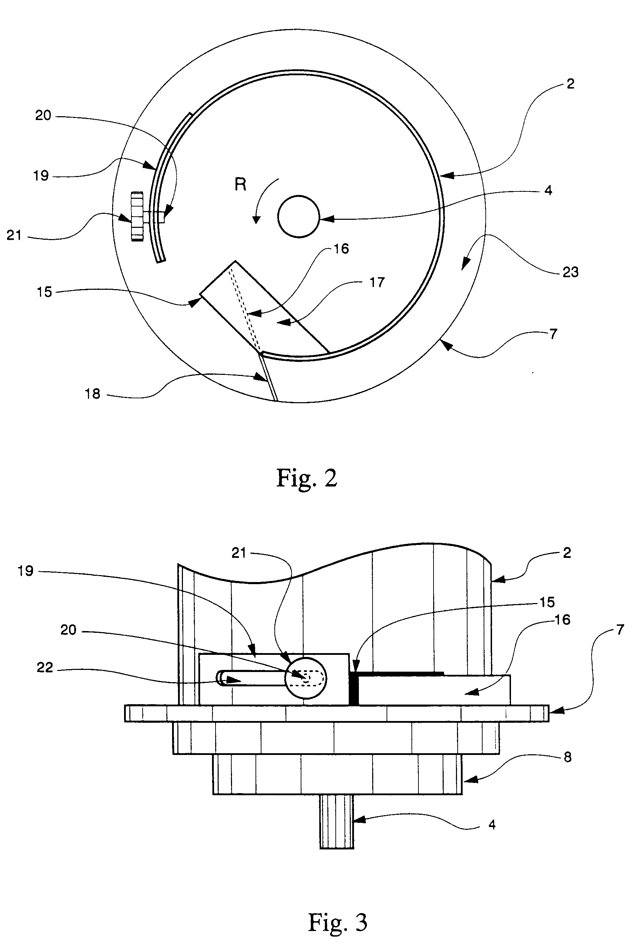

Les figures 2 et 3 sont plus particulièrement indiquées pour éclairer le fonctionnement de la zone d'évacuation des grains dans le dispositif doseur (2).

L'orifice de sortie (15) est fermé à tout mouvement radial des grains par la lamelle (16) et à tout mouvement vertical par la plaquette horizontale (17) (figurée en trait fin) qui est au contact de la lamelle (16) sur tout son trajet interne.

La plaquette (18) oriente les grains à leur sortie du dispositif (2) vers la périphérie du plateau tournant (7) recouvert par un revêtement rugueux (23) augmentant considérablement les frottements et "agrippant" de fait les grains à son contact. Ce revêtement a en réalité deux fonctions. La première, qui concerne l'entraînement tangentiel des grains, a été évoquée. La seconde consiste à empêcher lesdits grains d'aller vers la périphérie dès la sortie (15) franchie, ce qu'ils auraient naturellement tendance à faire sans un tel revêtement, du fait de la force centrifuge. La précision du dosage est donc considérablement améliorée par ce revêtement. Selon une approche pratique, un revêtement abrasif, particulièrement rugueux, convient parfaitement.

Les matériaux employés pour le réservoir (1), le dispositif de dosage (2) et les plaquettes (16, 18) privilégient, sur leur face en contact avec les grains en mouvement, une texture aussi lisse que possible afin que le produit puisse glisser dans les meilleures conditions. Ainsi, le réservoir (1) est par exemple formé d'un cylindre de PVC, dont les propriétés sont bien connues en matière de viscosité dynamique.

La figure 3 montre le dispositif de réglage des dimensions de l'orifice de sortie (15). Il s'agit d'un volet (19) coulissant le long de la surface externe du corps du dispositif (2), et que l'on peut fixer en une position de repos à l'aide d'une vis (20) actionnée par une molette (21). Cette vis (20) est solidaire du corps du dispositif doseur (2) : en coopération avec une glissière (22) dudit volet (19), elle permet de faire coulisser le volet (10) lorsqu'elle est desserrée, et le fixe lorsqu'elle est serrée.

Le volet (19) est incurvé de manière à épouser l'arc de cercle constitué par la surface extérieure du dispositif (2).

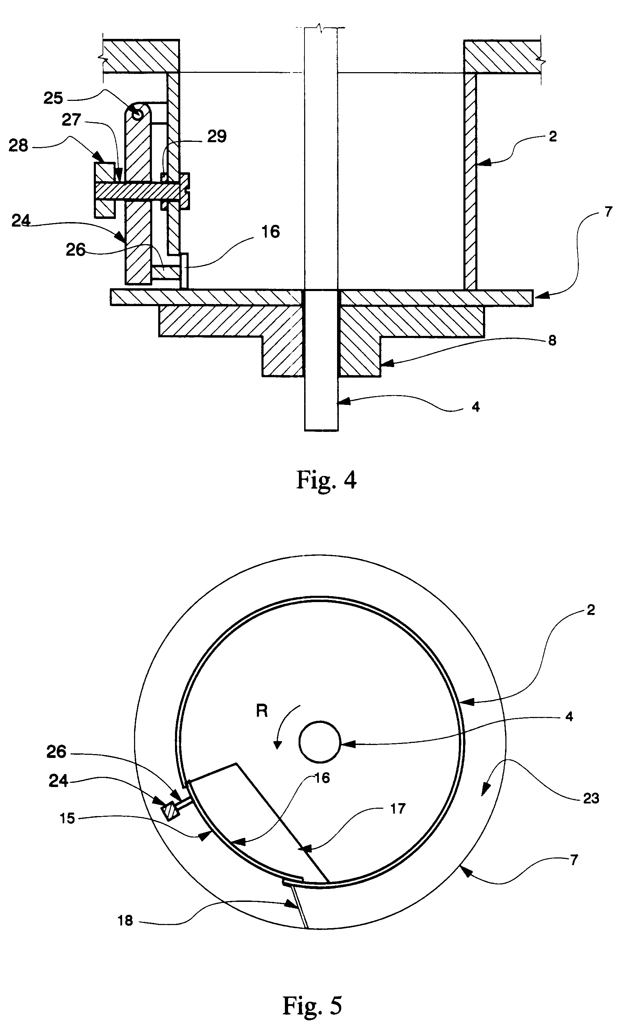

La variante des figures 4 et 5 comporte un système de réglage du débit de produit basé sur un bras (24) mobile en rotation autour d'un arbre (25) solidarisé au corps du dispositif doseur (2), doté d'une tige d'extrémité (26) exerçant une action contre la lamelle (16). Cette tige (26) est préférentiellement aplatie de façon à ne pas gêner la progression des grains vers la sortie (15).

La commande du mouvement du bras (24) s'exerce à l'aide d'une tige filetée (27) actionnée par une molette (28) qui transforme son mouvement rotatif en un mouvement translatif transversal dudit bras (24), lequel se rapproche ou s'éloigne de l'enveloppe du corps (2) en exerçant une force de même sens sur la lamelle (16) élastique.

Lorsqu'on déserre la molette (28) dans le sens de la fermeture de la voie de sortie, la lamelle reste au contact de la tige (26) du fait de la force de rappel qui s'exerce sur elle.

Le mouvement de vis sans fin de la tige filetée (27) est rendu possible car elle est libre en rotation dans l'embout (29), mais fixe en translation.

En fonctionnement, le plateau (17) tourne dans le sens indiqué par la flèche R (figure 2). La lamelle (16) constitue avec la plaquette (17) une sorte de tunnel de sortie par lequel seuls les grains qui sont dans l'axe dudit tunnel sont envoyés vers la sortie, grâce au mouvement imprimé par le plateau tournant (7). Les grains sont ensuite guidés vers le bord dudit plateau (7) par la plaquette (18). Ils tombent continûment et régulièrement dans la cuve éventuellement placée sous le système.

Selon une possibilité, le réservoir (1) est en inox, et chemisé par un cylindre en plastique qui améliore le glissement du produit vers le bas. L'enveloppe en inox peut comporter une fenêtre longitudinale qui permet de contrôler le niveau du savon à travers un chemisage translucide.

L'humidité, quelle que soit sa teneur, ne perturbe en rien le fonctionnement de l'ensemble, ni la quantité de produit granuleux en place dans le réservoir. Si celui-ci est plein, et que le système doit fonctionner sur une cuve dégageant de la vapeur, le dosage est aussi régulier que dans les conditions inverses.

## Revendications

1. Système de dosage d'un produit granuleux ou pulvérulent soluble dans l'eau dont la viscosité augmente rapidement à l'humidité, comprenant un réservoir (1) pour le produit et un dispositif doseur (2) duquel le produit granuleux s'échappe en tombant, ledit dispositif doseur (2) étant placé au-dessous et occupant un volume distinct et inférieur au volume du réservoir (1), avec un passage entre eux, chaque volume étant traversé par un arbre tournant (4) muni, au moins au voisinage d'une voie de sortie inférieure (14, 15), d'au moins une pale (5, 6),
caractérisé en ce que la surface de raccordement du dispositif doseur (2) au réservoir (1) ouverte au passage du produit granuleux vers le dispositif doseur (2) est égale à la section horizontale de ce dernier et inférieure à la surface de la section horizontale du réservoir (1), le volume inférieur comportant une lamelle (16) verticale qui pénètre va la voie de sortie (15) pratiquée dans la paroi du dispositif doseur (2) dans le volume dudit dispositif doseur (2) selon une direction sensiblement tangentielle au mouvement, permettant de guider le produit granuleux vers ladite voie de sortie (15) et d'empêcher l'agglomération des grains entre eux.

2. Système de dosage selon la revendication 1, caractérisé en ce que le dispositif doseur (2) comporte une voie de sortie (15) inférieure réglable débouchant sur un plateau tournant (7) muni d'un moyen de guidage (18) des grains vers la périphérie dudit plateau (7), lequel comprend au surplus un revêtement rugueux (23) destiné à augmenter les frottements afin d'empêcher tout glissement des grains sur sa surface supérieure.

3. Système de dosage selon l'une des revendications précédentes, caractérisé en ce que la lamelle (16) est surmontée le long de son trajet interne par une plaquette (17) empêchant les grains de pénétrer dans la voie de sortie (15) par le haut.

4. Système de dosage selon l'une des revendications 2 et 3, caractérisé en ce que la voie de sortie (15) du dispositif doseur (2) est réglable au moyen d'un volet (19) coulissant le long de l'orifice de sortie (15) à l'aide d'une glissière (22) pratiquée dans ledit volet (19) et d'une vis (20) solidarisée au corps du dispositif doseur (2), le maintien du volet (19) en une position fixe étant obtenu par serrage de la vis (20).

## Claims

1. System for apportioning a water-soluble granular or powdery product whose viscosity increases rapidly with moistness, comprising a bin (1) for the product and an apportioning device (2) from which the granular product escapes by falling, the said apportioning device (2) being positioned below and occupying a volume separate from and less than the volume of the bin (1), with a passage between them, each volume having pass through it a rotating shaft (4) provided, at least in the vicinity of a bottom outlet channel (14, 15), with at least one paddle (5, 6),
characterised in that the surface area by which the apportioning device (2) is connected to the bin (1), open to the passage of the granular product to the apportioning device (2), is equal to the horizontal cross section of the latter and less than the surface area of the horizontal cross section of the bin (1), the lower volume having a vertical blade (16) which, via the outlet channel (15) formed in the wall of the apportioning device (2), enters the volume of the said apportioning device (2) in a direction substantially tangential to the movement, enabling the granular product to be guided towards the said outlet channel (15) and preventing the grains from packing together.

2. Apportioning system according to Claim 1, characterised in that the apportioning device (2) has an adjustable bottom outlet channel (15) opening out onto a rotating plate (7) provided with a means (18) for guiding the grains towards the periphery of the said plate (7), which also comprises a rough covering (23) designed to increase friction in order to prevent any sliding of the grains on its top surface.

3. Apportioning system according to one of the preceding claims, characterised in that the blade (16) is surmounted, along its internal path, by a tip (17) preventing the grains from entering the outlet channel (15) from the top.

4. Apportioning system according to one of Claims 2 and 3, characterised in that the outlet channel (15) of the apportioning device (2) is adjustable by means of a flap (19) sliding along the outlet orifice (15) by means of a runner (22) formed in the said flap (19) and a screw (20) fixed to the body of the apportioning device (2), the holding of the flap (19) in a fixed position being obtained by tightening of this screw (20).

## Patentansprüche

1. Dosiersystem für ein körniges oder pulverförmiges in Wasser lösliches Produkt, dessen Viskosität mit der Feuchtigkeit rasch zunimmt, mit einem Reservoir (1) für das Produkt und einer Dosiervorrichtung (2), aus welcher das körnige Produkt nach unten fallend austragbar ist, wobei die Dosiervorrichtung (2) unten angeordnet ist und ein bestimmtes und gegenüber dem Volumen des Reservoirs (1) geringeres Volumen besitzt, mit einem Durchlaß zwischen ihnen, wobei jedes Volumen von einem drehbaren Arm (4) durchsetzt ist, der zumindest in der Nähe einer unteren Austragsstrecke (14, 15) wenigstens eine Schaufel (5, 6) aufweist,
**dadurch gekennzeichnet**,
daß die Verbindungsfläche zwischen Dosiervorrichtung (2) und Reservoir (1), die für den Durchtritt des körnigen Produkts in Richtung auf die Dosiervorrichtung (2) offen ist, gleich dem horizontalen Querschnitt der Dosiervorrichtung und geringer als die horizontale Querschnittsfläche des Reservoirs (1) ist, daß das geringere Volumen eine vertikale Lamelle (16) aufweist, die über die Austragsstrecke (15), die in der Wand der Dosiervorrichtung (2) ausgebildet ist, in das Volumen der Dosiervorrichtung (2) entlang einer zu der Bewegung ungefähr tangential verlaufenden Richtung eindringt, wodurch das körnige Produkt in Richtung auf die Austragsstrecke (15) geführt und ein Aglomerieren der Körner untereinander verhindert werden kann.

2. Dosiersystem nach Anspruch 1,
**dadurch gekennzeichnet**,
daß die Dosiervorrichtung (2) eine steuerbare untere Austragsstrecke (15) aufweist, die auf eine drehbare Platte (7) mündet, die mit einem Mittel (18) zum Führen der Körner in Richtung auf die Peripherie der Platte (7) ausgestattet ist, welches Führungsmittel zusätzlich einen rauhen Belag (23) zum Erhöhen der Reibung aufweist, um jegliches Gleiten von Körnern auf seiner oberen Oberfläche zu verhindern.

3. Dosiersystem nach einem der vorstehenden Ansprüche,
**dadurch gekennzeichnet**,
daß die Lamelle (16) entlang ihrer inneren Erstreckung von einem Plättchen (17) überfangen ist, wodurch die Körner daran gehindert werden, von oben in die Austragsstrecke (15) zu gelangen.

4. Dosiersystem nach Anspruch 2 oder 3,
**dadurch gekennzeichnet**,
daß die Austragsstrecke (15) der Dosiervorrichtung (2) mittels eines Schiebers (19), der entlang der Öffnung der Austragsstrecke (15) durch eine in dem Schieber (19) ausgebildete Führung (22) verschiebbar ist, und mittels einer mit dem Körper der Dosiervorrichtung (2) verbundenen Schraube (20) steuerbar ist, wobei die Beibehaltung einer festgelegten Stellung des Schiebers (19) durch Klemmung der Schraube (20) erreichbar ist.
